# EUROPÄISCHE PATENTANMELDUNG

(11) **EP 1 253 671 A2**
(43) Veröffentlichungstag der Anmeldung: **30.10.2002**
(21) Anmeldenummer: 02008151.9
(22) Anmeldetag: 12.04.2002
(51) Int. Cl.: H01R 11/28

(54) **Batterieklemme sowie Batterie**

(30) Priorität: 25.04.2001 DE 10120226
(71) Anmelder: Harting Automotive GmbH & Co. KG, 32339 Espelkamp (DE)
(72) Erfinder: Krause, Jens, Dr., 32369 Rahden (DE); Leve, Ludger, 32369 Rahden (DE)
(74) Vertreter: Sties, Jochen, Dipl.-Ing.

(57) **Zusammenfassung**

Die Erfindung betrifft eine Batterieklemme mit einem Kontaktring (26), der auf einen Batteriepol (10) einer anzuschließenden Batterie (5) aufgesetzt werden kann, einem Federring (24), der den Kontaktring (26) gegen den Batteriepol (10) drücken kann, und einem Andruckgehäuse (22), das den Federring (24) auf den Kontaktring (26) drücken kann. Die Erfindung betrifft auch eine Batterie (5) mit einem Batteriepol (10) und einer Schürze (14), wobei die Schürze (14) den Batteriepol (10) umgibt.

## Beschreibung

Die Erfindung betrifft eine Batterieklemme, mit der eine Batterie angeschlossen werden kann, insbesondere eine Fahrzeug-Starterbatterie, sowie eine Batterie, die besonders zur Verwendung in Kombination mit einer solchen Batterieklemme geeignet ist.

Das Problem beim Kontaktieren eines Batteriepols besteht darin, daß zur zuverlässigen Kontaktierung eine bestimmte Kontaktkraft möglichst präzise eingehalten werden muß. Bei zu geringen Kontaktkräften ergibt sich nur ein unzureichender metallischer Kontakt zwischen dem Batteriepol und der Batterieklemme. Werden dagegen zu hohe Kontaktkräfte aufgebracht, führt dies zu einer Verformung und einem Fließen des Materials des Batteriepols.

Die gebräuchlichste Batterieklemme besteht aus einer Kontaktschelle, die auf den Batteriepol aufgesetzt und dann mittels einer Schraube zusammengezogen wird. Nachteilig an dieser Art von Batterieklemme ist, daß die tatsächlich aufgebrachte Kontaktkraft nur unzureichend überwacht werden kann. Zum einen besteht die Gefahr, daß durch das Anziehen der Schraube mit einem Schraubenschlüssel ein sehr viel höheres Anzugsdrehmoment und somit eine sehr viel höhere Kontaktkraft aufgebracht wird, als dies eigentlich erforderlich ist. Zum anderen besteht die Gefahr, daß dann, wenn die Batterieklemme bei einem bereits verformten Batteriepol verwendet wird, die Kontaktschelle von der Schraube auf Block gezogen wird, so daß ein hohes Anzugsdrehmoment für die Schraube erhalten wird, das jedoch nicht mit der tatsächlich erzielten, niedrigeren Kontaktkraft übereinstimmt.

Aus dem Stand der Technik sind ferner verschiedene Batterieklemmen bekannt, die Federelemente verwenden, welche eine konstante Kontaktkraft gewährleisten sollen. Diese Batterieklemmen sind jedoch vergleichsweise kompliziert aufgebaut.

Die Aufgabe der Erfindung besteht darin, eine Batterieklemme zu schaffen, die einfach und kostengünstig herstellbar und gleichzeitig prozeßsicher ist, also mit hoher Sicherheit sowohl manuell als auch automatisiert montiert werden kann, ohne daß es zu Fehlmontagen kommen kann. Die Aufgabe der Erfindung besteht weiterhin darin, die bekannten Fahrzeugbatterien dahingehend weiterzubilden, daß sie in vorteilhafter Weise mit einer solchen Batterieklemme zusammenwirken können.

Diese Aufgabe wird erfindungsgemäß gelöst durch eine Batterieklemme mit einem Kontaktring, der auf einem Batteriepol einer anzuschließenden Batterie aufgesetzt werden kann, einem Federring, der den Kontaktring gegen den Batteriepol drücken kann, und einem Andruckgehäuse, daß den Federring auf den Kontaktring drücken kann. Diese Batterieklemme basiert auf dem Grundgedanken, möglichst wenige, einfach ausgebildete Bauteile zu verwenden, die optimal an die von ihnen zu erfüllende Funktion angepaßt sind. Der Kontaktring, an den ein Batteriekabel angekrimpt sein kann, dient ausschließlich zur Kontaktierung des Batteriepols. Die Kontaktkraft, mit welcher der Kontaktring elastisch gegen den Batteriepol gedrückt werden kann, wird von dem Federring bereitgestellt. Das Andruckgehäuse hat lediglich die Aufgabe, den Federring auf den Kontaktring zu drücken.

Gemäß der bevorzugten Ausführungsform der Erfindung ist vorgesehen, daß der Kontaktring mit mehreren elastischen Kontaktlaschen versehen ist, die zusammen einen Ring definieren, dessen Mittelachse mit der Mittelachse des zu kontaktierenden Batteriepols zusammenfällt. Vorzugsweise ist dabei vorgesehen, daß die Kontaktlaschen gekrümmt sind, so daß sie den Batteriepol in einem Bereich berühren, der beabstandet ist von ihrem freien Ende, an dem der Federring angreift. Weiterhin ist vorzugsweise vorgesehen, daß die freien Enden der Kontaktlaschen abgebogen sind, so daß der von den Kontaktlaschen definierte Ring eine Schrägfläche aufweist, an welcher der Federring angreift. Der Federring kann bei dieser Gestaltung der Kontaktlaschen auf die Schrägfläche des von den Kontaktlaschen gebildeten Ringes aufgeschoben werden, so daß die Kontaktlaschen elastisch vorgespannt werden. Die elastische Vorspannung der Kontaktlaschen ist möglich, da ihr Berührpunkt mit dem Batteriepol beabstandet von dem Bereich ist, an welchem der Federring an den Kontaktlaschen angreift. Die Vorspannung der Federlaschen addiert sich zur Vorspannung durch den Federring, so daß auch bei Setzungserscheinungen zwischen den Kontaktlaschen und dem Batteriepol eine ausreichende Kontaktkraft über einen langen Zeitraum erhalten bleibt.

Gemäß der bevorzugten Ausführungsform der Erfindung ist vorgesehen, daß der Kontaktring mit mehreren Haltelaschen versehen ist, mittels denen er an dem Andruckgehäuse verrastet ist. Weiterhin ist vorgesehen, daß das Andruckgehäuse mit mehreren Rastlaschen versehen ist, die mit den Haltelaschen zusammenwirken. Auf diese Weise sind das Andruckgehäuse und der Kontaktring zu einer Einheit zusammengefügt.

Gemäß der bevorzugten Ausführungsform der Erfindung ist ein Andruckdeckel vorgesehen, an dem das Andruckgehäuse angebracht ist. Der Andruckdeckel erfüllt eine Vielzahl von Funktionen. Er kann mit einer Nase versehen sein, die in eine Ausnehmung in einer Schürze einer anzuschließenden Batterie eingreifen kann. Auf diese Weise wird eine Hebelwirkung genutzt, mittels der die vom Andruckdeckel über das Andruckgehäuse auf den Federring aufgebrachte Kraft erhöht werden kann. Weiterhin kann am Andruckdeckel eine Verriegelungslasche vorgesehen sein, die an einem Absatz an einer Schürze einer anzuschließenden Batterie angreifen kann. Dies ermöglicht eine Verriegelung der gesamten Batterieklemme an der Batterie.

Gemäß der bevorzugten Ausführungsform der Erfindung ist vorgesehen, daß der Andruckdeckel mit zwei Langlöchern versehen ist und das Andruckgehäuse mit zwei Stiften, die in die Langlöcher eingreifen. Dabei liegen die Stifte vorzugsweise auf einer Linie, welche die Mittelachse des zu kontaktierenden Batteriepols schneidet. Dies gewährleistet, daß beim Aufdrücken des Andruckgehäuses auf den Federring keine Kippkräfte auftreten, da der Federring symmetrisch belastet wird.

Gemäß der bevorzugten Ausführungsform der Erfindung ist eine Blockierlasche vorgesehen, die sich in einer Blockierstellung in den Raum hinein erstreckt, der von dem Batteriepol eingenommen werden kann, wobei die Blockierlasche in der Blockierstellung verhindert, daß der Federring auf den Kontaktring aufgeschoben wird, und die Blockierlasche von dem Batteriepol in eine Freigabestellung gebracht werden kann, in welcher der Federring auf den Kontaktring aufgeschoben werden kann. Die Blockierlasche erhöht also die Prozeßsicherheit dahingehend, daß der Federring nur dann auf die Kontaktlaschen des Kontaktrings aufgeschoben werden kann, wenn der Kontaktring auf einen Batteriepol aufgesetzt ist. Ein unbeabsichtigtes "Schließen" der Batterieklemme vor dem korrekten Aufsetzen auf einen Batteriepol ist verhindert.

Die obige Aufgabe wird auch gelöst durch eine Batterie, die dadurch gekennzeichnet ist, daß ein Batteriepol und eine Schürze vorgesehen sind, wobei die Schürze den Batteriepol umgibt. Die Schürze dient zum einen als mechanischer Schutz für den Batteriepol. Zum anderen eröffnet sie neue Möglichkeiten zur Befestigung der Batterieklemme. An der Schürze kann beispielsweise eine Ausnehmung vorgesehen sein, in die die Nase des Andruckdeckels der Batterieklemme eingreifen kann. Weiterhin kann an der Schürze ein Absatz vorgesehen sein, an dem die Verriegelungslasche des Andruckdeckels der Batterieklemme angreifen kann.

Vorzugsweise ist vorgesehen, daß die Schürze mit einem Einschnitt versehen ist, durch den hindurch sich ein Anschlußabschnitt des Kontaktringes erstreckt, wobei der Kontaktring mit einem Anschlag versehen ist, der mit der Schürze zusammenwirkt, so daß eine Zugentlastung gebildet ist. Dies gewährleistet, daß etwaige Kräfte, die auf das Anschlußkabel wirken, nicht auf den Batteriepol und die Batterieklemme übertragen werden.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen, ab gebrochenen Ansicht eine Batterie mit aufgesetzter Batterieklemme in geöffnetem Zustand;
- Figur 2 die Batterie und die Batterieklemme von Fig. 1 in geschlossenem Zustand;
- Figur 3 eine abgeschnittene Draufsicht auf die Batterie mit aufgesetzter Batterieklemme, wobei alle Teile der Batterieklemme bis auf den Kontaktring entfernt wurden;
- Figur 4 eine schematische Draufsicht auf die Batterie mit abgenommener Batterieklemme;
- Figur 5 eine perspektivische, abgebrochene Ansicht der Batterie;
- Figur 6 in einer schematischen Ansicht einen Batteriepol mit aufgesetztem Kontaktring; und
- Figur 7 den Kontaktring der Batte rieklemme in einer Unteransicht.

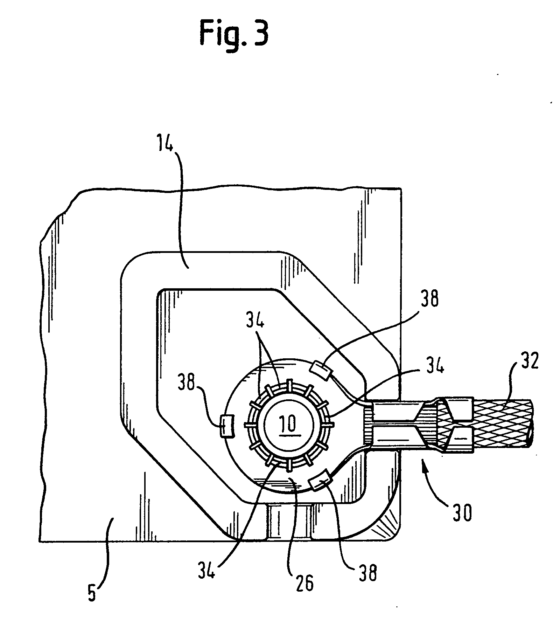

Zunächst wird anhand von Fig. 3 die Batterie beschrieben. Bei der Batterie handelt es sich um eine Fahrzeug-Starterbatterie, die einem Anlasser eines Verbrennungsmotors eines Kraftfahrzeugs elektrische Energie bereitstellen kann. Die Batterie, die hier mit dem Bezugszeichen 5 bezeichnet ist, weist üblicherweise zwei Batteriepole 10 auf, von denen hier nur ein einziger gezeigt ist. Die Anordnung der Batteriepole relativ zueinander sowie die Ausgestaltung der Batterie ist hier ohne Bedeutung, so daß die Batterie lediglich schematisch und ausschnittsweise angedeutet ist.

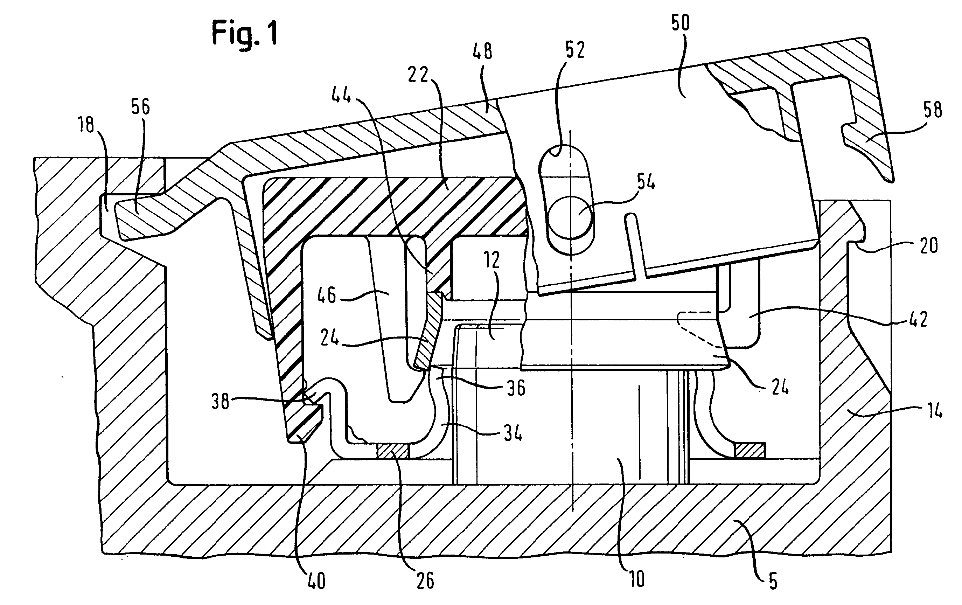

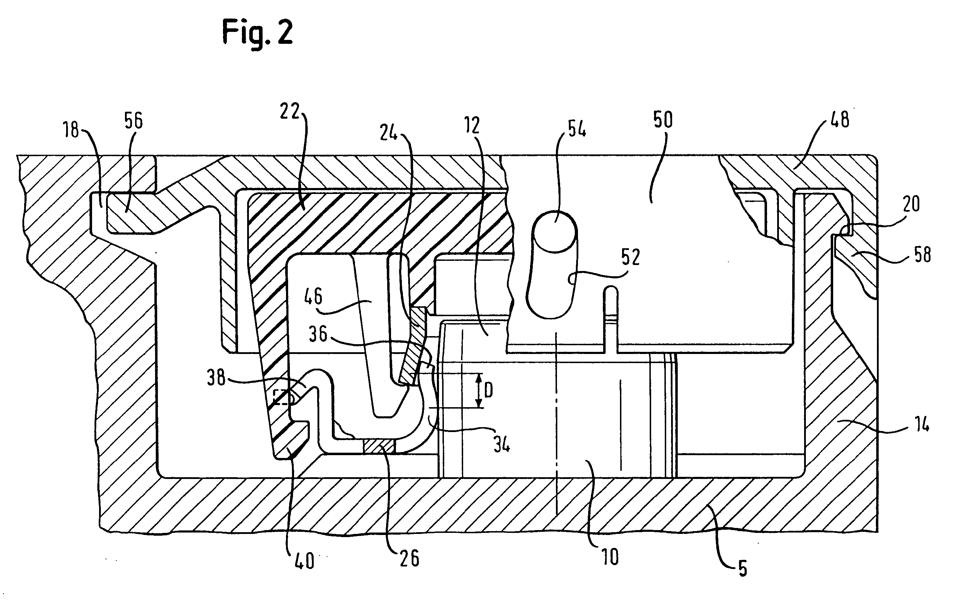

Der Batteriepol 10 ist im Gegensatz zu herkömmlichen Batteriepolen zylindrisch ausgestaltet (siehe insbesondere die Figuren 1 und 2) und lediglich mit einem vergleichsweise kurzen konischen Abschnitt 12 an seinem Ende versehen. Bei einem zylindrischen Batteriepol entstehen keine in Längsrichtung des Batteriepols wirkenden Kräfte, wenn eine Batterieklemme auf ihn aufgesetzt wird.

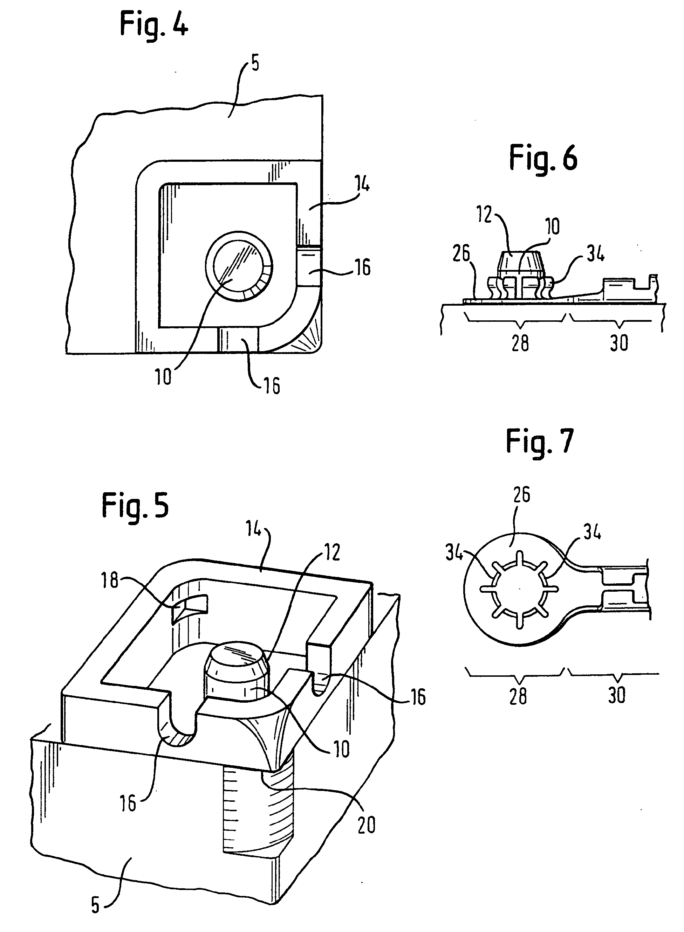

Die Batterie ist mit einer Schürze 14 versehen, die den Batteriepol vollständig umgibt. Die Schürze 14 ist mit zwei Einschnitten 16 versehen, die bezüglich der Mittelachse des Batteriepols in einem Winkel von 90° zueinander angeordnet sind. Die Funktion der Einschnitte 16 wird später erläutert. In der Schürze 14 ist ferner eine Ausnehmung 18 (siehe Fig. 5) vorgesehen, und an der Schürze ist ein Absatz 20 ausgebildet. Die Funktion von Ausnehmung 18 und Absatz 20 werden ebenfalls später erläutert.

Die Batterieklemme weist als wesentliche Bestandteile ein Andruckgehäuse 22, einen Federring 24 sowie einen Kontaktring 26 auf.

Der Kontaktring 26 (siehe insbesondere die Figuren 3, 6 und 7) besteht aus einem Metallblech mit einem Kontaktabschnitt 28 und einem Anschlußabschnitt 30. Der Kontaktabschnitt 28 dient zur Kontaktierung des Batteriepols 10, und der Anschlußabschnitt 30 dient zum Anschließen eines Batteriekabels 32, beispielsweise durch Verkrimpen.

Der Kontaktabschnitt 28 ist mit mehreren nebeneinanderliegenden Kontaktlaschen 34 versehen, die aus der Ebene des Anschlußabschnittes um etwa 90° nach oben hochgebogen sind (siehe insbesondere die Figuren 1 und 2). Die Gesamtheit der Kontaktlaschen 34 bildet einen unterbrochenen Ring, der den zu kontaktierenden Batteriepol konzentrisch umgibt. Jede einzelne Kontaktlasche ist dabei so gebogen, daß der kleinste Durchmesser des gebildeten Ringes, also der an dem Batteriepol anliegende Bereich, etwa in der Mitte zwischen dem Materialring, der die Kontaktlaschen miteinander verbindet, und dem freien Ende der Kontaktlaschen liegt. Das freie Ende 36 jeder Kontaktlasche ist so abgebogen, daß die Gesamtheit der Kontaktlaschen zusammen eine unterbrochene Schrägfläche bildet, an welcher der Federring 24 angreifen kann.

Der Kontaktring 26 ist schließlich mit drei Haltelaschen 38 versehen, die mit entsprechenden Rastlaschen 40 am Andruckgehäuse 22 zusammenwirken, um den Kontaktring 26 am Andruckgehäuse 22 festzulegen.

Das Andruckgehäuse 22 besteht aus Kunststoff und ist mit einer Blockierlasche 42 (siehe Fig. 1) versehen, die sich in einer Blockierstellung in den Raum hinein erstrecken kann, der von dem Batteriepol 10 eingenommen werden kann. In der Blockierstellung verhindert die Blockierlasche 42, daß der Federring 24 auf die Kontaktlaschen 34 des Kontaktringes 26 aufgeschoben werden kann, wenn die Batterieklemme nicht ordnungsgemäß auf einem Batteriepol angeordnet ist. Die Blockierlasche 42 wird von dem Batteriepol 10, wenn die Batterieklemme ordnungsgemäß auf ihn aufgesetzt ist, in eine Freigabestellung nach außen gedrückt, in der die Batterieklemme fest auf dem Batteriepol angebracht werden kann.

Das Andruckgehäuse 22 ist mit einem Andruckring 44 versehen, auf dem der Federring 24 gelagert ist. Zu diesem Zweck ist der Andruckring 44 innenseitig mit einem geringfügig erhöhten Rand versehen. Am Andruckgehäuse 22 sind weiterhin mehrere Federlaschen 46 vorgesehen, die an dem Federring 24 angreifen und ihn am Andruckring 44 halten.

Am Andruckgehäuse 22 ist ein Andruckdeckel 48 angebracht, der das Andruckgehäuse 22 außenseitig vollkommen abdeckt. Der Andruckdeckel 48 ist mit zwei Seitenteilen 50 versehen, in denen jeweils ein Langloch 52 ausgebildet ist. In jedes Langloch 52 greift ein Stift 54 ein, der am Andruckgehäuse 22 ausgebildet ist. Der Andruckdeckel 48 ist weiterhin mit einer Nase 56 versehen, die in die Ausnehmung 18 in der Schürze 14 der Batterie eingreift. Am entgegengesetzten Ende ist der Andruckdeckel 48 mit einer Verriegelungslasche 58 versehen, die mit dem Absatz 20 an der Schürze 14 der Batterie zusammenwirken kann.

Die beschriebene Batterieklemme wird in der folgenden Weise montiert: Zunächst wird der Federring 24 auf den Andruckring 44 im Andruckgehäuse 22 aufgesetzt, wo er von den Federlaschen 46 gehalten wird. Dann wird der Kontaktring 26 so angebracht, daß die Haltelaschen 38 des Kontaktrings hinter die Rastlaschen 40 des Andruckgehäuses 22 schnappen. Schließlich wird der Andruckdeckel 48 so auf das Andruckgehäuse 22 aufgesetzt, daß die Stifte 54 in die Langlöcher 52 eingreifen.

Zur Montage der Batterieklemme sind lediglich einfache Arbeitsschritte notwendig, um alle Bauteile zuverlässig miteinander zu verbinden, da die Bauteile automatisch ineinander einrasten, so daß eine vollständig montierte Einheit erhalten wird.

Die Batterieklemme wird in der folgenden Weise an einer Batterie montiert: Die Batterieklemme wird so in die Schürze eingesetzt, daß die Nase 56 in die Ausnehmung 18 eingreift und sich der Anschlußabschnitt 30 des Kontaktringes 26 durch einen der Einschnitte 16 der Schürze hindurch erstreckt. Da zwei Einschnitte vorgesehen sind, ist gewährleistet, daß sich der Anschlußabschnitt und das daran angeschlossene Batteriekabel 32 immer in einer für die jeweilige Einbausituation günstige Richtung erstrecken. Der Kontaktring 26 ist so ausgestaltet, daß der Anschlußabschnitt 28 auf der Innenseite der Schürze beiderseits des Einschnitts 16 anliegt, so daß eine Zugentlastung gebildet ist. Alternativ kann auf dem Kontaktring 26 auch ein Anschlag vorgesehen sein, der an der Schürze 14 anliegt.

Unmittelbar nach dem Einsetzen der Batterieklemme in die Schürze 14 der Batterie hat die Batterieklemme den in Fig. 1 gezeigten Zustand. Der Andruckdeckel 48 erstreckt sich leicht schräg nach oben, und der Federring 24 ist von den Kontaktlaschen 34 des Kontaktrings 26 beabstandet. Falls gewünscht, können der Batteriepol 10 und die Kontaktlaschen 34 relativ zueinander so dimensioniert werden, daß die Kontaktlaschen in diesem Zustand bereits mit leichter Vorspannung am Batteriepol anliegen.

Um die Batterieklemme vollständig zu montieren, wird ausgehend von dem in Fig. 1 gezeigten Zustand der Andruckdeckel 48 nach unten in die in Fig. 2 gezeigte Stellung gedrückt, bis die Verriegelungslasche 58 hinter dem Absatz 20 der Schürze 14 einschnappt. Dabei wird das Andruckgehäuse 22 bezüglich den Figuren 1 und 2 nach unten gedrückt, so daß der Federring 24 auf die freien Enden 36 der Kontaktlaschen 34 aufgeschoben wird. Der Federring 24, der auf seiner den Kontaktlaschen 34 zugewandten Seite konisch erweitert ist, drückt dabei die Kontaktlaschen 34 elastisch gegen den Batteriepol, so daß dort die erforderliche Kontaktkraft erzeugt wird. Wie in Fig. 2 zu sehen ist, ist die Berührstelle zwischen den Kontaktlaschen 34 und dem Batteriepol 10 um einen Abstand D beabstandet von dem Bereich der Berührung zwischen den Kontaktlaschen 34 und dem Federring 24. Dieser Abstand D führt dazu, daß die Kontaktlaschen 34 elastisch vorgespannt werden. Somit verfügt die Batterieklemme über eine sehr große Reserve, mit der eventuelle Setzungsvorgänge zwischen dem Batteriepol 10 und den Kontaktlaschen 34 kompensiert werden können.

Der Andruckdeckel 48 ist so ausgestaltet, daß er den innerhalb der Schürze 14 liegenden Bereich der Batterie und somit den Batteriepol 10 vollständig abdeckt. Weiterhin kann der Andruckdeckel 48 so ausgestaltet sein, daß er die Einschnitte 16 in der Schürze 14 weitgehend verschließt. Da der Batteriepol durch die Schürze 14 und auch den Andruckdeckel 48 vollständig abgedeckt ist, ist eine irrtümliche Kontaktierung mit beispielsweise Polzangen verhindert.

Zum Lösen der Batterieklemme wird die Verriegelungslasche 58 nach außen gezogen, so daß sie vom Absatz 20 freikommt. Dann kann der Andruckdeckel 48 nach oben abgezogen werden, was das Andruckgehäuse 22 und den Federring 24 mitnimmt. Somit sind die Kontaktlaschen 34 freigegeben, und die Batterieklemme kann vom Batteriepol abgezogen werden.

### Bezugszeichenliste:

- 5:: Batterie
- 10:: Batteriepol
- 12:: konischer Abschnitt
- 14:: Schürze
- 16:: Einschnitt
- 18:: Ausnehmung
- 20:: Absatz
- 22:: Andruckgehäuse
- 24:: Federring
- 26:: Kontaktring
- 28:: Kontaktabschnitt
- 30:: Anschlußabschnitt
- 32:: Batteriekabel
- 34:: Kontaktlasche
- 36:: freies Ende der Kontaktlasche
- 38:: Haltelasche
- 40:: Rastlasche
- 42:: Blockierlasche
- 44:: Andruckring
- 46:: Federlasche
- 48:: Andruckdeckel
- 50:: Seitenteil
- 52:: Langloch
- 54:: Stift
- 56:: Nase
- 58:: Verriegelungslasche

## Patentansprüche

1. Batterieklemme mit einem Kontaktring (26), der auf einen Batteriepol (10) einer anzuschließenden Batterie aufgesetzt werden kann, einem Federring (24), der den Kontaktring gegen den Batteriepol drücken kann, und einem Andruckgehäuse (22), das den Federring auf den Kontaktring drücken kann.

2. Batterieklemme nach Anspruch 1, **dadurch gekennzeichnet, daß** der Kontaktring (26) mit mehreren elastischen Kontaktlaschen (34) versehen ist, die zusammen einen Ring bilden, dessen Mittelachse mit der Mittelachse des zu kontaktierenden Batteriepols (10) zusammenfällt.

3. Batterieklemme nach Anspruch 2, **dadurch gekennzeichnet, daß** die Kontaktlaschen (34) gekrümmt sind, so daß sie den Batteriepol (10) in einem Bereich berühren, der beabstandet ist von ihrem freien Ende (36), an dem der Federring (24) angreift.

4. Batterieklemme nach einem der Ansprüche 2 und 3, **dadurch gekennzeichnet, daß** die freien Enden (36) der Kontaktlaschen (34) abgebogen sind, so daß der von den Kontaktlaschen gebildete Ring eine Schrägfläche aufweist, an welcher der Federring (24) angreift.

5. Batterieklemme nach einem der vorhergehenden Ansprüche, **dadurch gekennzeichnet, daß** der Kontaktring (26) mit mehreren Haltelaschen (38) versehen ist, mittels denen er an dem Andruckgehäuse (22) verrastet ist.

6. Batterieklemme nach Anspruch 5, **dadurch gekennzeichnet, daß** das Andruckgehäuse (22) mit mehreren Rastlaschen (40) versehen ist, die mit den Haltelaschen (38) zusammenwirken.

7. Batterieklemme nach einem der vorhergehenden Ansprüche, **dadurch gekennzeichnet, daß** das Andruckgehäuse (22) einen Andruckring (44) aufweist, an dem sich der Federring (24) abstützt.

8. Batterieklemme nach Anspruch 7, **dadurch gekennzeichnet, daß** das Andruckgehäuse (22) mehrere Federlaschen (46) aufweist, die an dem Federring (24) angreifen und ihn am Andruckring (44) halten.

9. Batterieklemme nach einem der Ansprüche 7 und 8, **dadurch gekennzeichnet, daß** der Andruckring (44) einstückig mit dem Andruckgehäuse (22) ausgeführt ist.

10. Batterieklemme nach einem der vorhergehenden Ansprüche, **dadurch gekennzeichnet, daß** ein Andruckdeckel (48) vorgesehen ist, an dem das Andruckgehäuse (22) angebracht ist.

11. Batterieklemme nach Anspruch 10, **dadurch gekennzeichnet, daß** der Andruckdeckel mit zwei Langlöchern (52) versehen ist und das Andruckgehäuse mit zwei Stiften (54), die in die Langlöcher eingreifen.

12. Batterieklemme nach Anspruch 11, **dadurch gekennzeichnet, daß** die Stifte (54) auf einer Linie liegen, welche die Mittelachse des zu kontaktierenden Batteriepols (10) schneidet.

13. Batterieklemme nach einem der Ansprüche 10 bis 12, **dadurch gekennzeichnet, daß** der Andruckdeckel mit einer Nase (56) versehen ist, die in eine Ausnehmung (18) in einer Schürze (14) einer anzuschließenden Batterie eingreifen kann.

14. Batterieklemme nach einem der Ansprüche 10 bis 13, **dadurch gekennzeichnet, daß** der Andruckdeckel mit einer Verriegelungslasche (58) versehen ist, die an einem Absatz (20) in einer Schürze (14) einer anzuschließenden Batterie angreifen kann.

15. Batterieklemme nach einem der vorhergehenden Ansprüche, **dadurch gekennzeichnet, daß** der Kontaktring (26) mit einem Anschlag versehen ist, der an einer Schürze einer anzuschließenden Batterie anliegen kann, so daß er als Zugentlastung wirkt.

16. Batterieklemme nach einem der vorhergehenden Ansprüche, **dadurch gekennzeichnet, daß** mindestens eine Blockierlasche (42) vorgesehen ist, die sich in einer Blockierstellung in den Raum hinein erstreckt, der von dem Batteriepol (10) eingenommen werden kann, wobei die Blockierlasche in der Blockierstellung verhindert, daß der Federring (24) auf den Kontaktring (26) aufgeschoben wird, und die Blockierlasche von dem Batteriepol in einer Freigabestellung gebracht werden kann, in welcher der Federring auf den Kontaktring aufgeschoben werden kann.

17. Batterie (5), insbesondere zur Verwendung mit einer Batterieklemme nach einem der vorhergehenden Ansprüche, **dadurch gekennzeichnet, daß** ein Batteriepol (10) und eine Schürze (14) vorgesehen sind, wobei die Schürze (14) den Batteriepol (10) umgibt.

18. Batterie nach Anspruch 17, **dadurch gekennzeichnet, daß** der Batteriepol (10) zylindrisch ist und einen konischen Abschnitt (12) an seinem Ende aufweist.

19. Batterie nach einem der Ansprüche 17 und 18, **dadurch gekennzeichnet, daß** die Schürze mit einer Ausnehmung (18) versehen ist, in die eine Nase (56) eines Andruckdeckels (48) einer Batterieklemme eingreifen kann.

20. Batterie nach einem der Ansprüche 17 bis 19, **dadurch gekennzeichnet, daß** die Schürze (14) mit einem Absatz (20) versehen ist, an dem eine Verriegelungslasche (58) eines Andruckdeckels (48) einer Batterieklemme angreifen kann.

21. Batterie nach einem der Ansprüche 17 bis 20, **dadurch gekennzeichnet, daß** die Schürze (14) mit einem Einschnitt (16) versehen ist, durch den hindurch sich ein Anschlußabschnitt (30) eines Kontaktrings (26) erstreckt, wobei der Kontaktring mit einem Anschlag versehen ist, der mit der Schürze zusammenwirkt, so daß eine Zugentlastung gebildet ist.

22. Batterie nach Anspruch 21, **dadurch gekennzeichnet, daß** zwei Einschnitte (16) vorgesehen sind, die eine Kontaktierung des Batteriepols (10) von mehreren Seiten ermöglichen.
